# EUROPÄISCHE PATENTSCHRIFT

(11) **EP 2 328 766 B1**
(45) Veröffentlichungstag und Bekanntmachung des Hinweises auf die Patenterteilung: **02.10.2013**
(21) Anmeldenummer: 09776648.9
(22) Anmeldetag: 26.05.2009
(51) Int. Cl.: B60G 17/052

(54) **ELEKTROPNEUMATISCHE STEUERANORDNUNG FÜR EINE NIVEAUREGULIERUNG EINES FAHRZEUGES**
ELECTROPNEUMATIC CONTROL ARRANGEMENT FOR AN AUTOMATIC VEHICLE LEVEL CONTROL SYSTEM
SYSTÈME DE COMMANDE ÉLECTROPNEUMATIQUE POUR UNE RÉGULATION DE L'ASSIETTE D'UN VÉHICULE

(30) Priorität: 30.08.2008 DE 102008045213
(43) Veröffentlichungstag der Anmeldung: 08.06.2011
(73) Patentinhaber: WABCO GmbH, 30453 Hannover (DE)
(72) Erfinder: JOVERS, Ingo, 30989 Gehrden (DE); KLEEN, Berend, 30161 Hannover (DE); LUCAS, Johann, 31319 Sehnde (DE); RATHJEN, Frauke, 30453 Hannover (DE); RUTSCH, Andreas, 30519 Hannover (DE); SCHWARZER, Andreas, 30966 Hemmingen (DE); STELLMACHER, Thomas, 31655 Stadthagen (DE)
(74) Vertreter: Lauerwald, Jörg
(86) Internationale Anmeldenummer: PCT/EP2009/003700
(87) Internationale Veröffentlichungsnummer: WO 2010/022807

(56) Entgegenhaltungen:
- EP-A- 1 464 556
- EP-A- 1 647 425
- EP-A- 1 731 335
- EP-A- 1 731 395
- EP-B- 1 406 806
- WO-A-2004/030956
- WO-A-2006/045489
- WO-A-2006/122906
- DE-A1- 3 815 612
- DE-A1- 19 546 324

## Beschreibung

Die Erfindung betrifft eine elektropneumatische Steueranordnung für eine Niveauregulierung eines Fahrzeuges, insbesondere eines Nutzfahrzeuges.

Zur Niveauregulierung an Fahrzeugen mit Luftbälgen bzw. Luftfedern ist im Allgemeinen eine elektropneumatische Steueranordnung mit einer Magnetventileinheit vorgesehen, die an eine Druckluftzuführung angeschlossen ist, wobei die Druckluftzuführung an einen Luftdruckspeicher oder auch direkt einen Kompressor angeschlossen ist. Eine elektronische Steuereinrichtung (ECU) steuert die Magnetventileinheit an, um zum Anheben Druckluft auf die angeschlossenen, zu den Luftbälgen führenden Druckluftleitungen zu verteilen, zum Absenken Luft von den Luftbälgen zu einem Auslass abzugeben oder die Luft zum Niveauhalten zu sperren.

Die Ansteuerung der Magnetventileinheit erfolgt im Allgemeinen über eine in der Fahrerkabine vorgesehene Steuereinrichtung. Hierzu sind elektrische Kabel von der Steuereinrichtung zu der Magnetventileinheit derartig zu verlegen, dass diese auch bei den auftretenden Schwingungen nicht brechen können und ordnungsgemäß kontaktiert sind.

Die WO2006045489A1 beschreibt eine aus Modulen mit elektrischen und pneumatischen Komponenten aufgebaute elektro-pneumatische Zentraleinheit eines Nutzfahrzeuges, wobei die Module in miteinander definierter Lage lösbar verbundenen Modulgehäusen untergebracht sind, an welchen standardisierte pneumatische Anschlüsse und elektrische Anschlüsse derart angeordnet sind, dass beim Verbinden der Modulgehäuse einander zugeordnete, an sich gegenüberliegende Verbindungsflächen der Modulgehäuse angeordnete Anschlüsse direkte elektrische und pneumatische Verbindungen untereinander ausbilden. Einige der Module können elektrische und pneumatische Anschlüsse für externe Signale aufweise, wobei die Modulgehäuse auch zusätzliche, kabelgebundene elektrische Anschlüsse besitzen, um spezielle Bedieneinheiten einlesen zu können oder nicht in der Zentraleinheit enthaltene Geräte oder Module anzusteuern.

Der Erfindung liegt die Aufgabe zugrunde, eine elektromagnetische Steueranordnung zu schaffen, die eine sichere und dennoch einfache Montage ermöglicht.

Diese Aufgabe wird durch eine elektropneumatische Steueranordnung nach Anspruch 1 gelöst. Die Unteransprüche beschreiben bevorzugte Weiterbildungen.

Erfindungsgemäß wird somit die elektronische Steuereinrichtung direkt auf der Magnetventileinheit montiert, wobei die Kontaktierung durch eine Steckverbindung erfolgt. Die Steckverbindung kann insbesondere durch entsprechende komplementäre Steckverbinder an dem Gehäuse der Magnetventileinheit und der Steueranordnung gebildet werden.

Gemäß einer besonders bevorzugten Ausbildung wird die Steuereinheit lediglich auf der Magnetventileinheit montiert; es ist somit keine weitere Befestigung der Steuereinrichtung an der Fahrzeugstruktur erforderlich. Zur sicheren mechanischen Fixierung können ergänzend z.B. Schraubenverbindungen oder auch Rastmechanismen wie z. B. Clipse vorgesehen sein, die ein Lösen der Steckverbindung bei Schwingungen oder anderen Kräften und Momenten verhindern.

Erfindungsgemäß entfällt somit die zeit- und kostenaufwändige Verlegung der Kabel zwischen der elektronischen Steuereinrichtung und der Magnetventileinheit. Hierdurch wird die Sicherheit gegenüber Kabelbruch und anderen Schäden, die bei Schwingungen und einwirkenden Kräften und Momenten auftreten können, erhöht. Die Montage wird erleichtert, da keine separate Befestigung in der Fahrerkabine erfolgt. Zur Wartung können die beiden Teile entsprechend getrennt und separat ausgetauscht werden.

Die elektronische Steuereinrichtung kann insbesondere in einem Gehäuse einen Schaltungsträger mit den aufgesetzten elektronischen Bauteilen, d.h. insbesondere ein Mikrocontroller, Treiber-Schaltungen und den Steckern enthalten. Die Stecker können hierbei z.B. zur gleichen Seite oder auch zu gegenüberliegenden Seiten zeigen, so dass erfindungsgemäß eine hohe Flexibilität bei der räumlichen Anordnung möglich ist.

Die Erfindung wird im Folgenden anhand der beiliegenden Zeichnungen an einigen Ausführungsformen erläutert. Es zeigen:
- Fig. 1: eine elektropneumatische Steueranordnung für ein Niveau-regulierungssystem eines Fahrzeugs gemäß einer ersten Ausführungsform in auseinander gezogener Darstellung;
- Fig. 2: eine elektropneumatische Steueranordnung gemäß einer weiteren Ausführungsform in auseinander gezogener Darstellung;
- Fig. 3: ein elektropneumatischer Schaltplan eines pneumatischen Niveauregulierungssystems mit der erfindungsgemäßen elektropneumatischen Steueranordnung.

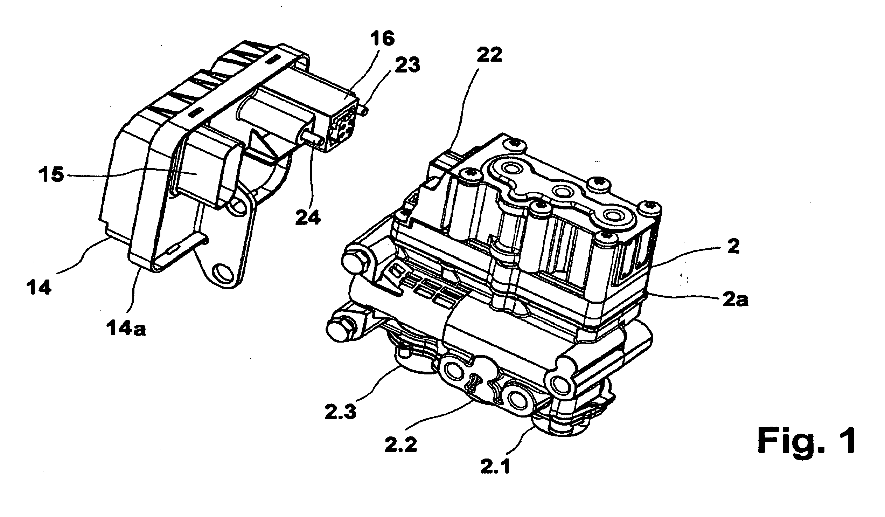

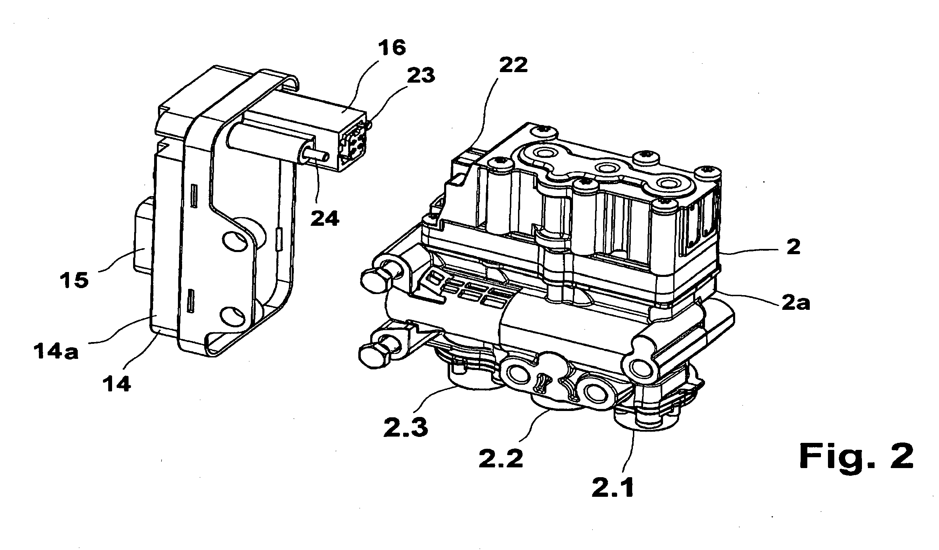

Gemäß Fig. 1 und Fig. 2 weist eine erfindungsgemäße elektropneumatische Steueranordnung 1 zur Niveauregulierung einer Achse eine Magnetventileinheit 2 und eine elektronische Steuereinrichtung (ECU) 14 auf.

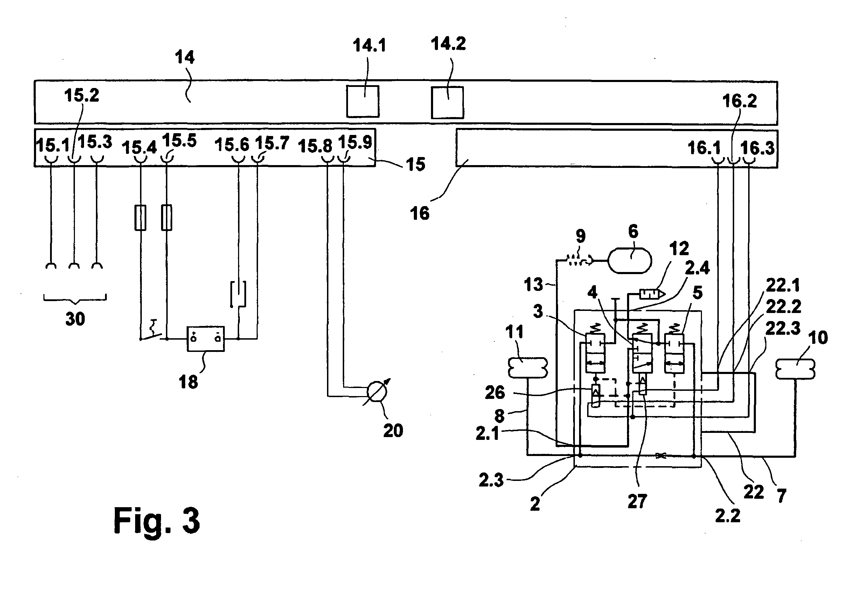

Die Magnetventileinheit 2 weist in einem Gehäuse 2a zwei Vorsteuereinrichtungen 26 und 27 zur parallelen Ansteuerung von drei Magnetventilen 3, 4, 5 auf, die im Schaltplan der Fig. 3 detaillierter in ihrer Funktion gezeigt sind. An dem Gehäuse 2a sind ein Drucklufteinlass 2.1, zwei Druckluftanschlüsse 2.2 und 2.3 und ein Druckluftauslass 2.4 vorgesehen. Der Drucklufteinlass 2.1 ist an eine Druckluftleitung 13 angeschlossen, die optional über ein Rückschlagventil 9 zu einem Druckluftspeicher 6 führt, der in an sich bekannter und hier nicht gezeigter Weise von einem Kompressor gespeist wird. Die Druckluftanschlüsse 2.2 und 2.3 sind jeweils an eine Druckluftleitung 7 und 8 angeschlossen, über eine Drossel miteinander verbunden und führen zu Luftbälgen 10, 11. Die Luftbälge 10, 11 sind bei dieser Ausführungsform auf einer Achse des Fahrzeugs vorgesehen, d.h. links und rechts. Alternativ hierzu kann die Magnetventileinheit 2 auch zur Niveauregulierung von zwei Achsen dienen, so dass die Druckluftleitungen 7 und 8 nicht miteinander verbunden und jede Druckluftleitung an zwei Luftbälge angeschlossen sind. An den Druckluftauslass 2.4 ist ein Schalldämpfer 12 angeschlossen.

Die elektronische Steuereinrichtung (ECU) 14 weist ein Gehäuse 14a auf, an dem zwei Stecker 15 und 16 ausgebildet sind. Der Stecker 15 weist gemäß dem Schaltplan der Fig. 3 die Anschlüsse 15.1, 15.2 und 15.3 für einen CAN-Bus 30 des Fahrzeuges auf. Weiterhin sind Anschlüsse 15.4, 15.5, 15.6 und 15.7 zum Anschluss an die Batterie 18 des Fahrzeugs, bzw. das Bordnetz des Fahrzeugs für die 24V-Spannungsversorgung vorgesehen. Weiterhin sind dem Stecker 15 gemäß der gezeigten Ausführungsform Anschlüsse 15.8 und 15.9 zum Anschluss eines Sensors 20 zur Messung der Niveauhöhe an der Achse vorgesehen, wobei hier entsprechend auch mehrere derartige Sensoren 20 über entsprechende Anschlüsse den Stecker 15 anschließbar sind.

Bei der Ausführungsform der Fig. 1 sind die beiden Stecker 15 und 16 an der gleichen Seite des Gehäuses 14a vorgesehen. Bei der hierzu alternativen Ausführungsform der Fig. 2 sind die beiden Stecker 15 und 16 an den gegenüberliegenden Seiten des Gehäuses 14a ausgebildet, bei ansonsten gleicher Funktionalität.

Die elektronische Steuereinrichtung 14 weist in an sich bekannter Weise einen Mikrocontroller 14.1 und Treiber-Schaltungen, z.B. Treiber-ASICS 14.2 auf einer gemeinsamen Platine bzw. Schaltungsträger auf, an der auch die Stecker 15 und 16 angebunden sind.

Der zweite Stecker 16 weist Anschlüsse 16.1, 16.2 und 16.3 auf, die als Steueranschlüsse in die Magnetventileinheit 2 gehen.

Erfindungsgemäß ist hierbei eine Steckverbindung zwischen der Magnetventileinheit 2 und der elektronischen Steuereinrichtung (ECU) 14 ausgebildet, indem der zweite Stecker 16 in einen an dem Gehäuse 2a der Magnetventileinheit 2 ausgebildeten Gegenstecker 22 gesetzt ist, der entsprechend drei Anschlüsse 22.1, 22.2 und 22.3 aufweist, von denen ein Anschluss, z.B. der Anschluss 22.3 als Masseanschluss dient und die weiteren Anschlüsse 22.1 und 22.2, die mit den Anschlüssen bzw. Kontakten 16.1 und 16.2 kontaktiert werden, zur Ansteuerung der elektrischen Vorsteuereinrichtungen 26 und 27 der beiden Magnetventile 3 und 4 dienen.

Erfindungsgemäß können ergänzend Schraubenverbindungen zwischen den Gehäusen 14a und 2a vorgesehen sein, wozu z.B. Schrauben 23 und 24 im Gehäuse 14a aufgenommen sind, die in entsprechende Schraubengewinde im Gehäuse 2a eingedreht werden. Die Schrauben 23 und 24 dienen der Sicherung, damit nicht durch Schwingungen und andere Einwirkende Kräfte und Momente die Steckverbindungen 22 und 23 voneinander gelöst werden.

Die gesamte elektropneumatische Steueranordnung 1 wird gemeinsam im Fahrzeug, vorzugsweise an einem Strukturteil des Fahrzeugs, befestigt. Hierbei kann insbesondere die Magnetventileinheit 2 über ihr Gehäuse 2a an dem Strukturteil befestigt werden, so dass die elektronische Steuereinrichtung 14 lediglich am Gehäuse 2a der Magnetventileinheit 2 befestigt und nicht weiter im Fahrzeug befestigt ist.

Der innere Aufbau der Magnetventileinheit 2 ist als solches bekannt. So kann z.B. ein 3/2-Wegeventil 4 an den Drucklufteinlass 2.1 angeschlossen sein, dessen Ausgänge an Eingänge der 2/2-Wegeventile 3 und 5 angeschlossen sind, wobei z. B. die Ventile 3 und 5 in der nicht bestromten Ruhestellung zunächst sperren und das Ventil 4 im unbestromten Zustand die gemeinsame Ausgangsleitung der Ventile 3 und 5 an den Druckluftausgang 2.4 und somit an den Schalldämpfer 12 legt. Wenn die Vorsteuereinheit 27 das 3/2-Wegeventil 4 in die Durchlassstellung schaltet, sind die Eingänge der 2/2-Wegeventile 3 und 5 mit Druckluft beaufschlagt, so dass bei nachfolgender Ansteuerung der Ventile 3 und 5 über die Vorsteuereinheit 26 entsprechend die Druckluftausgänge 2.3 und 2.2 mit Druckluft beaufschlagt werden und somit die Druckluft an die Luftbälge 10 und 11 ausgegeben wird. Wenn die 2/2-Wegeventile 3 und 5 über ihre Vorsteuereinheit 26 bei nicht-verstelltem 3/2-Wegeventil angesteuert werden, kann somit Druckluft über die Druckluftanschlüsse 2.2 und 2.3 und den Druckluftauslass 2.1 sowie den Schalldämpfer 12 zur Niveauabsenkung abgelassen werden.

Die Gehäuse 2a und 14a sind insbesondere mehrschalig aus Kunststoff und/oder Metall ausgebildet.

Die beiden Ausführungsformen der Fig. 1 und 2 können wahlweise je nach Einbausituation und dem zur Verfügung stehenden Montageraum ausgewählt werden, um die elektrischen Anschlüsse entsprechend platzieren zu können.

Bei der Montage wird somit die Magnetventileinrichtung 2 an einem Strukturteil des Fahrzeugs befestigt, die Druckluftleitungen 7, 8, 13 angeschlossen und die elektronische Steuereinrichtung 14 durch Aufstecken bzw. ineinander Stecken der Steckverbinder 16 und 22 und Festziehen der Schrauben 23 und 24 montiert und kontaktiert, wobei diese Befestigung auch vor der Anbringung am Fahrzeug erfolgen kann.

## Patentansprüche

1. Elektropneumatische Steueranordnung für eine Niveauregulierung eines Fahrzeuges, insbesondere Nutzfahrzeuges, wobei die Steueranordnung (1) mindestens aufweist:
eine Magnetventileinheit (2), die mindestens zwei elektropneumatische Magnetventile (3, 4, 5), einen Drucklufteinlass (2.1) für eine Druckluftzuführung (13), mindestens einen Druckluftanschluss (2.2, 2.3) für mindestens einen Luftbalg (10, 11) und elektrische Steuereingänge (22.1, 22.2, 22.3) aufweist, und
eine elektronische Steuereinrichtung (14) zur Ansteuerung der Magnetventileinheit (2), wobei die elektronische Steuereinheit (14) Steuerausgänge (16.1, 16.2, 16.3) zum elektrischen Anschluss an die Steuereingänge (22.1, 22.2, 22.3) der Magnetventileinheit (2) aufweist,
**dadurch gekennzeichnet, dass**
an dem Gehäuse (2a) der Magnetventileinheit (2) ein Steckverbinder (22) ausgebildet ist, in dem die elektrischen Steuereingänge (22.1, 22.2, 22.3) angeordnet sind,
an dem Gehäuse (14a) der elektronischen Steuereinrichtung (14) ein Steckverbinder (16) vorgesehen ist, in dem die Steuerausgänge (16.1, 16.2, 16.3) angeordnet sind, und
die Steckverbinder (16, 22) mechanisch ineinander gesteckt sind, wobei an dem Gehäuse (14a) der elektronischen Steuereinrichtung (14) zusätzlich zu dem Steckverbinder (16) mit dem Steuerausgängen (16.1, 16.2, 16.3) ein weiterer Steckverbinder (15) zum Anschluss an zumindest eine elektrische Versorgungsspannung des Fahrzeuges, und eine Datenleitung (15.1, 15.2, 15.3) des Fahrzeuges ausgebildet ist,
**dadurch gekennzeichnet, dass**
an dem weiteren Steckverbinder (15) der Steuereinrichtung (14) weiterhin Anschlüsse (15.8, 15.9) für einen oder mehrere Sensoren (20) zur Messung einer Niveauhöhe für die Niveauregulierung vorgesehen sind.

2. Steueranordnung nach Anspruch 1, **dadurch gekennzeichnet, dass** elektrische Verbindung zwischen der Magnetventileinheit (2) und der elektronischen Steuereinrichtung (14) kabellos und ausschließlich über die beiden Steckverbinder (16, 22) ausgebildet ist.

3. Steueranordnung nach Anspruch 1 oder 2, **dadurch gekennzeichnet, dass** zwischen der Magnetventileinheit (2) und der Steuereinrichtung (14) zusätzlich zu der Steckverbindung der beiden Steckverbinder (16, 22) eine formschlüssige Verbindung, z. B. eine Schraubenverbindung mit Schrauben (23, 24), ausgebildet ist.

4. Steueranordnung nach Anspruch 3, **dadurch gekennzeichnet, dass** die formschlüssige Verbindung in oder an den beiden Steckverbindern (16, 22) ausgebildet ist.

5. Steueranordnung nach einem der vorherigen Ansprüche, **dadurch gekennzeichnet, dass** an der Magnetventileinheit (2) mechanische Befestigungsanschlüsse zur Befestigung in dem Fahrzeug vorgesehen sind und die elektronische Steuereinrichtung (14) lediglich an der Magnetventileinheit (2) montiert und von dieser getragen ist.

6. Steueranordnung nach Anspruch 1, **dadurch gekennzeichnet, dass** die beiden Steckverbinder (15, 16) der elektronischen Steuereinrichtung (14) an der gleichen Seite des Gehäuse (14a) der Steuereinrichtung (14) vorgesehen sind.

7. Steueranordnung nach Anspruch 1, **dadurch gekennzeichnet, dass** die beiden Steckverbinder (15, 16) der Steuereinrichtung (14) an gegenüberliegenden Seiten des Gehäuses (14a) der Steuereinrichtung (14) vorgesehen sind.

8. Steueranordnung nach einem der vorherigen Ansprüche, **dadurch gekennzeichnet, dass** die elektronische Steuereinrichtung (14) einen Schaltungsträger (14.3) und auf dem Schaltungsträger montiert einen Mikrocontroller (14.1) und ein oder mehrere Treiberschaltungen (14.2) zur Ansteuerung der Magnetventile aufweist.

9. Steueranordnung nach einem der vorherigen Ansprüche, **dadurch gekennzeichnet, dass** die Magnetventileinheit (2) ein 3/2-Wegeventil (4) und mindestens zwei 2/2-Wegeventile (3, 5) aufweist, die zum wahlweisen Sperren oder Freigeben der Druckluftanschlüsse (2.2, 2.3) an entweder den Druckluftanschluss (2.1) oder einen Druckluftausgang (2.4) zum Druckluftablassen vorgesehen sind.

10. Steueranordnung nach Anspruch 9, **dadurch gekennzeichnet, dass** in dem Gehäuse (2a) der Magnetventileinrichtung (2) zwei elektrische Vorsteuereinheiten (26, 27) zur Ansteuerung der Magnetventile (3, 4, 5) vorgesehen sind.

11. Fahrzeug mit einer elektropneumatischen Steueranordnung (1) nach einem der vorherigen Ansprüche, wobei die Magnetventileinrichtung (2) an einem Bauteil des Fahrzeugs befestigt ist und die elektronische Steuereinrichtung (14) frei von einer Befestigung am Fahrzeug ist.

## Claims

1. Electropneumatic control arrangement for controlling the ride level of a vehicle, in particular a commercial vehicle, with the control arrangement (1) at least having:
a solenoid valve unit (2) which has at least two electropneumatic solenoid valves (3, 4, 5), a compressed-air inlet (2.1) for a compressed-air supply means (13), at least one compressed-air connection (2.2, 2.3) for at least one air bellows (10, 11) and electrical control inputs (22.1, 22.2, 22.3), and
an electronic control device (14) for driving the solenoid valve unit (2), with the electronic control unit (14) having control outputs (16.1, 16.2, 16.3) for electrical connection to the control inputs (22.1, 22.2, 22.3) of the solenoid valve unit (2), **characterized in that**
a plug connector (22) is formed on the housing (2a) of the solenoid valve unit (2), the electrical control inputs (22.1, 22.2, 22.3) being arranged in said plug connector,
a plug connector (16) is provided on the housing (14a) of the electronic control device (14), the control outputs (16.1, 16.2, 16.3) being arranged in said plug connector, and
the plug connectors (16, 22) are mechanically inserted one into the other, wherein, in addition to the plug connector (16) with the control outputs (16.1, 16.2, 16.3), a further plug connector (15) for connection to at least one electrical supply voltage of the vehicle, and a data line (15.1, 15.2, 15.3) of the vehicle is formed on the housing (14a) of the electronic Control device (14), **characterized in that**
connections (15.8, 15.9) for one or more sensors (20) for measuring a level height for ride level control are also provided on the further plug connector (15) of the control device (14).

2. Control arrangement according to Claim 1, **characterized in that** the electrical connection between the solenoid valve unit (2) and the electronic control device (14) is formed without cables and solely by means of the two plug connectors (16, 22).

3. Control arrangement according to Claim 1 or 2, **characterized in that**, in addition to the plug connection of the two plug connectors (16, 22), an interlocking connection, for example a screw connection by way of screws (23, 24), is formed between the solenoid valve unit (2) and the control device (14).

4. Control arrangement according to Claim 3, **characterized in that** the interlocking connection is formed in or on the two plug connectors (16, 22).

5. Control arrangement according to one of the preceding claims, **characterized in that** mechanical fixing connections for fixing purposes in the vehicle are provided on the solenoid valve units (2), and the electronic control device (14) is mounted solely on the solenoid valve unit (2) and supported by said solenoid valve unit.

6. Control arrangement according to Claim 1, **characterized in that** the two plug connectors (15, 16) of the electronic control device (14) are provided on the same side of the housing (14a) of the control device (14).

7. Control arrangement according to Claim 1, **characterized in that** the two plug connectors (15, 16) of the control device (14) are provided on opposite sides of the housing (14a) of the control device (14).

8. Control arrangement according to one of the preceding claims, **characterized in that** the electronic control device (14) has a circuit mount (14.3) and, mounted on the circuit mount, a microcontroller (14.1) and one or more driver circuits (14.2) for driving the solenoid valves.

9. Control arrangement according to one of the preceding claims, **characterized in that** the solenoid valve unit (2) has a 3/2-way valve (4) and at least two 2/2-way valves (3, 5) which are provided to selectively block or unblock the compressed-air connections (2.2, 2.3) at either the compressed-air connection (2.1) or a compressed-air output (2.4) for discharging compressed-air.

10. Control arrangement according to Claim 9, **characterized in that** two electrical pilot control units (26, 27) for driving the solenoid valves (3, 4, 5) are provided in the housing (2a) of the solenoid valve device (2).

11. Vehicle having an electropneumatic control arrangement (1) according to one of the preceding claims, with the solenoid valve device (2) being fixed to a component of the vehicle, and the electronic control device (14) not being fixed to the vehicle.

## Revendications

1. Système de commande électropneumatique pour une régulation de l'assiette d'un véhicule automobile, notamment d'un véhicule utilitaire, dans lequel le dispositif de commande (1) présente au moins :
une unité de soupape magnétique (2), qui présente au moins deux soupapes magnétiques (3,4,5) électropneumatiques, une admission d'air pressurisé (2.1) pour une alimentation en air pressurisé (13), au moins un raccord d'air pressurisé (2.2,2.3) pour au moins un soufflet pneumatique (10,11) et des entrées de commande électriques (22.1,22.2,22.3), et
un dispositif de commande électronique (14) à des fins de pilotage de l'unité de soupape magnétique (2), l'unité de commande électronique (14) présentant des sorties de commande (16.1,16.2,16.3) à des fins de connexion électrique aux entrées de commande (22.1,22.2,22.3) de l'unité de soupape magnétique (2), **caractérisé en ce que**
sur le logement (2a) de l'unité de soupape magnétique (2) est réalisé un connecteur enfichable (22), dans lequel sont disposées les entrées de commande électriques (22.1,22.2,22.3), sur le logement (14a) du dispositif de commande électronique (14) est prévu un connecteur enfichable (16), dans lequel sont disposées les sorties de commande (16.1,16.2,16.3), et
les connecteurs enfichables (16,22) sont enfichés mécaniquement l'un dans l'autre, sur le logement (14a) du dispositif de commande électronique (14), en plus du connecteur enfichable (16) avec les sorties de commande (16.1,16.2,16.3), un autre connecteur enfichable (15) étant réalisé à des fins de raccordement à au moins une tension d'alimentation électrique du véhicule, et une ligne de données (15.1,15.2,15.3) du véhicule étant réalisée,
**caractérisé en ce que**
sur l'autre connecteur enfichable (15) du dispositif de commande (14) sont en outre prévus des raccords (15.8,15.9) pour un ou plusieurs capteurs (20) à des fins de mesure d'une hauteur d'assiette pour la régulation de l'assiette.

2. Système de commande selon la revendication 1, **caractérisé en ce que** une liaison électrique entre l'unité de soupape magnétique (2) et le dispositif de commande électronique (14) est conçue sans fil et exclusivement par l'intermédiaire des deux connecteurs enfichables (16,22).

3. Système de commande selon les revendications 1 ou 2, **caractérisé en ce qu'**entre l'unité de soupape magnétique (2) et le dispositif de commande (14), en plus de la liaison par enfichage des deux connecteurs enfichables (16,22), est réalisée une liaison par conjonction de forme, par exemple une liaison par vissage avec des vis (23,24).

4. Système de commande selon la revendication 3, **caractérisé en ce que** la liaison par conjonction de forme est réalisée dans ou sur les deux connecteurs enfichables (16,22).

5. Système de commande selon une des revendications précédentes, **caractérisé en ce que** sur l'unité de soupape magnétique (2) sont prévus des raccords de fixation mécaniques à des fins de fixation dans le véhicule et le dispositif de commande électronique (14) est monté uniquement sur l'unité de soupape magnétique (2) et supporté par celle-ci.

6. Système de commande selon la revendication 1, **caractérisé en ce que** les deux connecteurs enfichables (15,16) du dispositif de commande électronique (14) sont prévus sur le même côté du logement (14a) du dispositif de commande (14).

7. Système de commande selon la revendication 1, **caractérisé en ce que** les deux connecteurs enfichables (15,16) du dispositif de commande (14) sont prévus sur des côtés opposés (14a) du dispositif de commande (14).

8. Système de commande selon une des revendications précédentes, **caractérisé en ce que** le dispositif de commande électronique (14) présente un support de circuit (14.3) et, monté sur le support de circuit, un microcontrôleur (14.1) et un ou plusieurs circuits de pilotage (14.2) pour piloter les soupapes magnétiques.

9. Système de commande selon une des revendications précédentes, **caractérisé en ce que** l'unité de soupape magnétique (2) présente une vanne à 3/2 voies (4) et au moins deux vannes à 2/2 voies (3,5), qui sont prévues afin de bloquer ou débloquer au choix les raccords d'air pressurisé (2.2,2.3) soit sur le raccord d'air pressurisé (2.1), soit sur une sortie d'air pressurisé (2.4) vers les sections d'évacuation d'air pressurisé.

10. Système de commande selon la revendication 9, **caractérisé en ce que** dans le logement (2a) du dispositif de soupape magnétique (2), sont prévues deux unités de commande pilote électriques (26,27) à des fins de pilotage des soupapes magnétiques (3, 4, 5).

11. Véhicule comportant un dispositif de commande électropneumatique (1) selon une des revendications précédentes, dans lequel le dispositif de soupape magnétique (2) est fixé sur un composant du véhicule et le dispositif de commande électronique (14) est exempt d'une fixation sur le véhicule.
